# EUROPEAN PATENT SPECIFICATION

(11) **EP 3 244 650 B1**
(45) Date of publication and mention of the grant of the patent: **13.03.2019**
(21) Application number: 17176848.4
(22) Date of filing: 14.11.2012
(51) Int. Cl.: H04W 28/02, H04L 1/00, H04W 52/34, H04W 52/36, H04W 36/22, H04L 12/801

(54) **DEVICE-BASED ARCHITECTURE FOR SELF ORGANIZING NETWORKS**
VORRICHTUNGSBASIERTE ARCHITEKTUR FÜR SELBSTORGANISIERENDE NETZWERKE
ARCHITECTURE DE DISPOSITIFS POUR RÉSEAUX À AUTO-ORGANISATION

(30) Priority: 14.11.2011 US 201161559669 P; 13.11.2012 US 201213676044; 13.11.2012 US 201213676025
(43) Date of publication of application: 15.11.2017
(62) Divisional of application: 12850667.2
(73) Proprietor: T-Mobile USA, Inc., Bellevue, WA 98006-1350 (US)
(72) Inventor: Tapia, Pablo, Bellevue, WA Washington 98006-1350 (US); Williams, Carl Craig, Bellevue, WA Washington 98006-1350 (US)
(74) Representative: Grünecker Patent- und Rechtsanwälte PartG mbB

(56) References cited:
- EP-A1- 1 357 681
- US-A1- 2004 203 981
- US-A1- 2009 061 774

## Description

### BACKGROUND

Wireless communications are comprised of two or more communications terminals communicating via a communications link. In turn, the communications link may comprise one or more intervening servers. These intervening servers perform connection and routing services between various endpoints in the communications link. For example, a smart-phone communications terminal may have an air interface to a cellular tower (also referred to herein as a base station) in a local cellular sector, which in turn may have one or more servers managing a plurality of communications links. The one or more servers may in turn connect via a landline to a core network which has one or more servers managing another plurality of communications links. The core network forwards communications to a destination communications terminal.

The destination communications terminal may be another mobile device, such as a smart-phone or tablet computer connected by a similar communications link comprising an air interface and a cell sector ultimately connecting to the core network. Alternatively, a destinations terminal may be a data server such as an electronic mail ("e-mail") server, or an internet web site.

Communications links typically comprise a downlink, where a communications terminal receives data from a base station of an access network, and an uplink, where a communications terminal transmits data to the base station. Whereas in the past, the volume of data to send via uplink was limited to data requests and relatively compact voice data, increasingly uplink transmissions contain relatively large data requests, occasionally causing uplink congestion. For example, the present popularity of social media, non-voice, data communications results in uplinks of photos and videos captured by a mobile communications terminal. By way of another example, video-calls are increasing in popularity which comprises both an audio component and a video component.

Accordingly there is an opportunity to self optimize networks to meet the present day data volume challenges, such as the above-mentioned challenges posed by uplink congestion. One way is to perform link adaptations with a link adaptation routine to maintain data speeds as specified by Quality of Service ("QoS") settings. Another way is to increase signal power with a power control routine. However, where both a link adaptation routine and a power control routine are present, their optimizations may interfere with each other resulting in a non-optimized communications link.

Furthermore, with the proper knowledge of the type of application and/or application-specific quality, the system can make better educated decisions about whether to increase the power beyond a certain limit, which has implications in overall system interference and device battery life. Having the proper knowledge of applications, network and device conditions enables a better approach to self organizing networks in which each individual device can be adjusted independently based on operator defined rules.

US 2009/061774 A1 relates to the control and adaptation of transmit parameters for wireless communication between a transmitter and at least one receiver to provide joint power and link adaptation. The control system gathers or receives information on power consumption characteristics of the transmitter and receiver(s), as well as information on communication characteristics. If the link performance needs to be adapted optimization may be required. The control system in the transmitter optimizes the link transmit parameters so as to minimize the total consumed energy based on the relevant input parameters.

US 2004/203981 A1 describes a method for determining an uplink transmit power level at which to transmit a current data block over a radio link from the mobile to the base transmitter station. The method evaluates airlink quality measurements in the radio link over a measurement interval, wherein each time a message is sent to the mobile station, it is evaluated whether a specified number of uplink blocks have been transmitted by the mobile station since the start of the measurement interval. Based on the evaluated airlink quality measurement, the method determines the uplink transmit power level that the mobile should be using for the current block, and adjusts the transmit power level, if necessary, for the current block.

EP 1 357 681 A1 relates to a power controllable wireless mobile communications system using an adaptive modulation and coding scheme comprising a signal-to-noise ratio (SNR) extracting unit which extracts an SNR from a signal which is processed in a predetermined modulation and coding scheme and received.

It is the object of the present invention to provide an improved system and method for link adaptation and power control.

This object is solved by the subject matter of the independent claims.

Embodiments are defined by the dependent claims.

### BRIEF DESCRIPTION OF THE DRAWINGS

The Detailed Description is set forth with reference to the accompanying figures. In the figures, the left-most digit(s) of a reference use of the same reference numbers in different figures indicates similar or identical items.
FIG. 1 is a diagram illustrating a chart of data speed as a function of a communications terminal's distance from a wireless tower.
FIG. 2 is a block diagram of an example of a hardware platform for use with a device-based architecture for self optimizing networks.
FIG. 3 is an example of a communications link to be self optimized.
FIG. 4 illustrates an example device-based architecture for self optimizing networks.
FIG. 5 is a flow chart of an example process to balance link adaptation and power control routines while self optimizing a network.
FIG. 6 is a flow chart of an example process to self-optimize a network utilizing feedback over the communications link end to end.
FIG. 7 illustrates a wireless communication network in which congestion in uplink traffic is detected and controlled.
FIG. 8 is a flowchart showing a method of detecting and mitigating congestion in uplink traffic of a wireless communication network.
FIG. 9 is a flowchart showing a method of predicting and mitigating congestion in uplink traffic of a wireless communication network.

### DETAILED DESCRIPTION

### Overview

The embodiments and/or examples of the following description which are not covered by the appended claims are considered as not being part of the present invention. This disclosure describes a device-based architecture for self optimizing networks. A server located in the network may gather information from multiple data sources, including mobile terminals, Radio Access Network(s) (RAN), a Backhaul, and a Core Network and makes decisions 4 about optimum configuration parameters affecting a specific mobile terminal. The server then communicates the specific configuration parameters to the mobile terminal or to the local sector serving that mobile terminal. The decision on new configuration parameters may take into account radio conditions and core network characteristics. The optimum settings may consider operator specific policies, such as considerations for extended battery life, data user experience (QoE) and special handling of network congestion situations. The policies may take into account user profile(s), application profile(s), and mobile terminal characteristic(s).

One example application is described in which the device link adaptation and power control methods are optimized to control excessive interference in the uplink direction. Described herein is a wireless communication network that includes architecture for detecting congestion in uplink traffic from various user equipments (UEs) to a base station (BS), and controlling the congestion. For example, a base station (BS) (or any other appropriate component of the network) may detect congestion in the uplink traffic from the plurality of user equipments (UEs) (also interchangeably referred to herein as mobile terminals, communication terminals, and client devices), and also detect a level of the congestion (e.g., the level of the congestion may provide a measure of the congestion). Based on the detected congestion, various measures may be taken to control the congestion (e.g., to reduce or mitigate the congestion).

In an embodiment, based on detecting the congestion, the BS (or any other appropriate component of the network) may modify one or more network settings associated with one or more UEs included in the network. The UEs may receive the modified network settings, and communicate with the BS based on the modified network settings.

In an embodiment, based on detecting the congestion, the BS (or any other appropriate component of the network) may modify network settings associated with a bit rate, a transmit time interval (tti) and/or a transmission power used by the UEs to transmit to the BS. For example, the BS (or any other appropriate component of the network) may facilitate the UEs to transmit to the BS using a reduced bit rate, a reduced tti and/or a reduced transmission power, resulting in a corresponding reduction in the congestion in the uplink traffic. In an embodiment, the BS (or any other appropriate component of the network) may facilitate the UEs to transmit to the BS using reduced signaling overhead (e.g., where the signaling overhead comprises control signals, acknowledgements, etc. associated with the transmission of uplink traffic), resulting in a corresponding reduction in the congestion in the uplink traffic. Such a reduction in the signaling overhead may be achieved, for example, by enabling a higher connection time between the UEs and the BS for uplink transmission, having the UEs enter a sleep mode less frequently, changing a communication protocol used for communication between the UEs and the BS, and/or the like.

The specific measure(s) taken to reduce the congestion may be based on the detected level of the congestion. For example, for a low level of the detected congestion (e.g., based on the congestion exceeding a first threshold level), a UE may marginally reduce a bit rate for transmission to the BS. However, for a high level of the detected congestion (e.g., based on the congestion exceeding a second threshold level, where the second threshold level may be higher than the first threshold level), the UE may significantly reduce the bit rate for transmission to the BS, reduce a transmission power for transmission to the BS, and enter the sleep mode less frequently (e.g., to reduce the signaling overhead associated with entering the sleep mode).

### Data Speed as a Function of Distance Between a Communication Terminal and a Handset

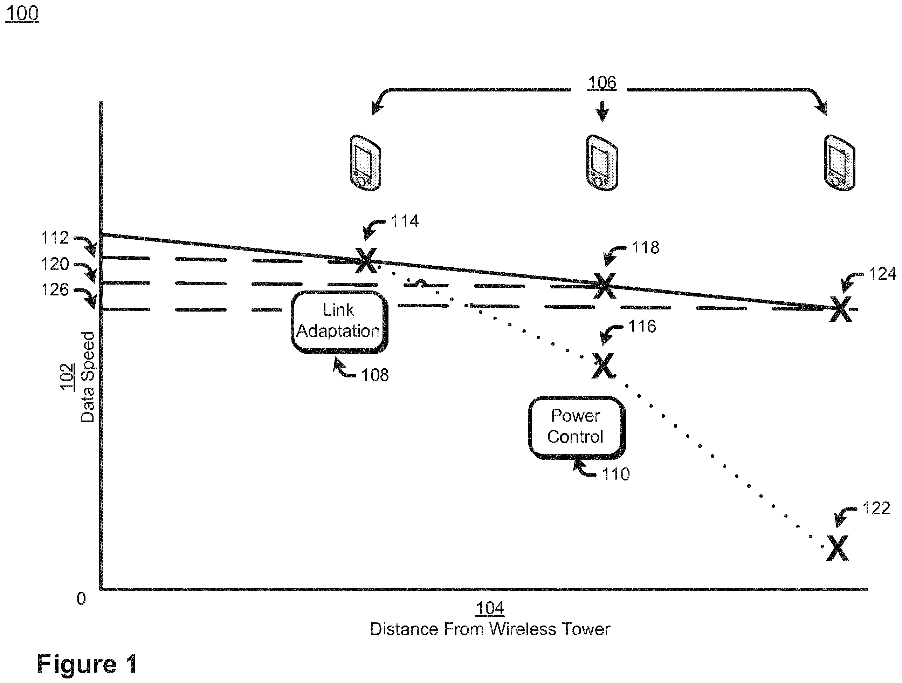

Figure 1 is an illustrative chart 100 of data speed 102 as a function of a communications terminal's 106 distance from a wireless tower 104. Specifically, the X axis 104 of the chart 100 represents a terminal's 106 distance from a wireless tower 104 and the Y axis 102 of the chart 100 represents the data speed 102 at the terminal 106.

The data speed 102 at communications terminal 106 is expected to decrease as distance from a wireless tower 104 increases. Generally, the decrease is not linear. Rather, absent adaptation algorithms and other intervening factors, signal strength drops proportional to the inverse square of distance, and accordingly, data speed, while not necessarily decreasing as an inverse square, generally decreases more rapidly as distance increases.

Two adaptation techniques, often included as routines 108, 110 in a communications terminal 106, are link adaptation 108 and power control 110. Link adaptation routines 108 include any algorithm implementations in either software or hardware to match signal or protocol parameters, such as modulation and coding to communications link conditions and characteristics. Power control routines 110 include any algorithm implementations in either software or hardware to adapt wireless signal strength to communications link conditions and characteristics.

Because link adaptation 108 and power control 110 operate independently of each other, they may also interfere with each other. For example, link adaptation 108 may operate in a feedback loop. Specifically, link adaptation 108 may make a data speed measurement, and applies a compensation. Then link adaptation 108 makes another data speed measurement, and applies another compensation. If the compensation is interpolating, the link adaptation 108 may attempt to overcompensate or undercompensate in anticipation of what the data speed will be. However, if power control 110 is operating at the same time, the link adaptation's 108 ability to properly compensate becomes drastically suboptimal. In schemes where power control 110 is aggressively applied, link adaptation 108 can results in wild and seemingly random data speed fluctuations.

Accordingly, power control 110 may be applied less aggressively to allow link adaptation 108 sufficient time to apply compensations to maintain data speed. Specifically, when data speed drops below a predetermined threshold 112, link adaptation 108 and not power control 110 may be applied. Without link adaptation 108, data speed may drop to data point 116. With link adaptation, 108, data speed, may drop to data point 118.

If data speed continues to drop 118 below a predetermined threshold 120, power control 110 may then be additionally applied. Since power control 110 is applied after link adaptation 108 compensations have stabilized, the additional power control 110 will not be accompanied with wild fluctuations in data speed.

Without link adaptation 108 and/or power control 110, data speed may drop precipitously, as indicated by data point 122. With link adaptation 108 and power control 110 applied in a fashion to minimize uncontrolled data speed fluctuations, data speed may be maintained about a predetermined threshold 126, which may represent a desired QoS or Quality of User Experience ("QoE"). Note that under some conditions, link adaptation 108 and power control 110 may not be sufficient to maintain QoS/QoE data speed levels. However, in a roaming scenario, link adaptation 108 and power control 110 applied as described above may extend out the distance before a cell tower switch, and accordingly may further improve data speed in areas with relatively sparse cell towers.

### Exemplary Hardware Platform

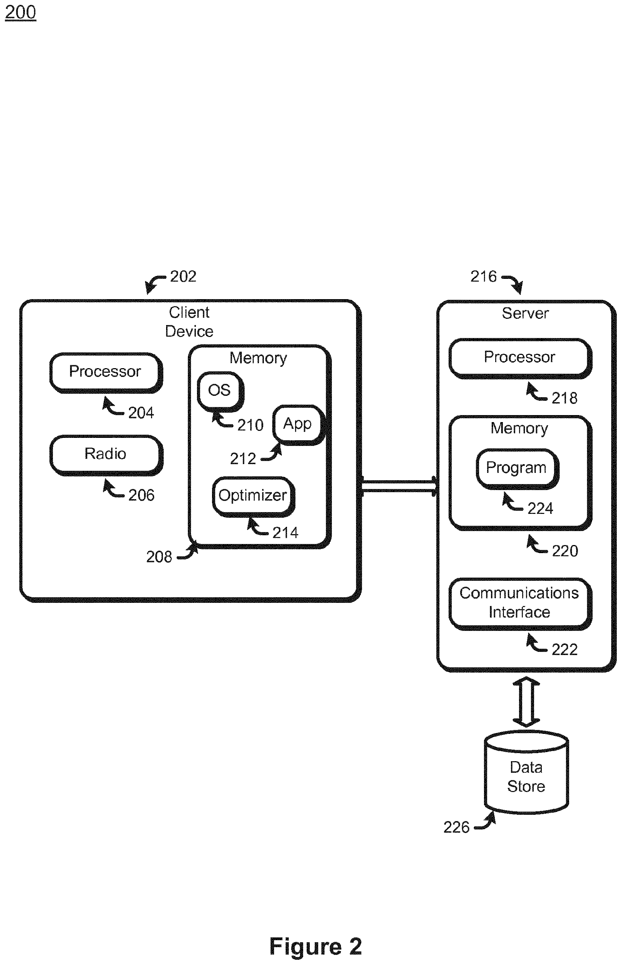

Figure 2 illustrates one possible embodiment of a hardware environment 200 for use with a device-based architecture for self optimizing networks. Specifically, Figure 2 illustrates a client device 202 configured to balance link adaptation and/or power control routines and to receive and/or transmit communications link conditions and/or characteristics for self optimizing networks. Communications link conditions may include empirical measurements of the communications link such as received signal strength. Communications link characteristics may include settable properties of the communications link such as the degree that signal power is boosted.

Client device 202 is any computing device with a processor 204, a radio 206 that supports at least two transports, and a memory 208. Radio 206 may support unlicensed spectrum communications such as Wi-Fi, or licensed spectrum such as WCDMA and CDMA2000. Alternatively, client device 202 may have multiple radios to support different communications transports.

Client device 202's memory 208 is any computer-readable media which may store several programs including an operating system 210, one or more applications 212 and an optimizer 214. In particular, the optimizer 214 includes software to support self optimizing networks. The optimizer 214 may include link adaptation software components, power control software components, software components to balance the link adaptation and power control components, to transmit and/or receive communications link conditions and/or characteristics.

Computer-readable media includes, at least, two types of computer-readable media, namely computer storage media and communications media. Computer storage media includes volatile and nonvolatile, removable and non-removable media implemented in any method or technology for storage of information such as computer readable instructions, data structures, program modules, or other data. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transmission mechanism. As defined herein, computer storage media does not include communication media.

Client device 202 may communicate to an intervening server 216. The intervening server 216 is any computing device capable of routing a video-call to another party. Examples may include servers in a cellular base station, or alternatively in the core network for a cellular carrier. The intervening server 216 comprises processor 218, memory 220 and communications interface 222. As per the preceding discussion regarding client 202, memory 220 is any computer-readable media including both computer storage media and communication media.

In particular, memory 220 store programs 224 which may include an operating system and software components to support self optimizing networks, such as during uplink congestion. Self optimizing networks software components may include routines to receive, measure, and/or transmit communications link conditions and characteristics.

Memory 220 may also store programs 224 that may include a database management system. Accordingly, the intervening server 216 may include data store 226. Data store 226 may be configured as a relational database, an object-oriented database, a columnar database, or in any configuration to support self optimizing networks.

### Exemplary Communications Stack

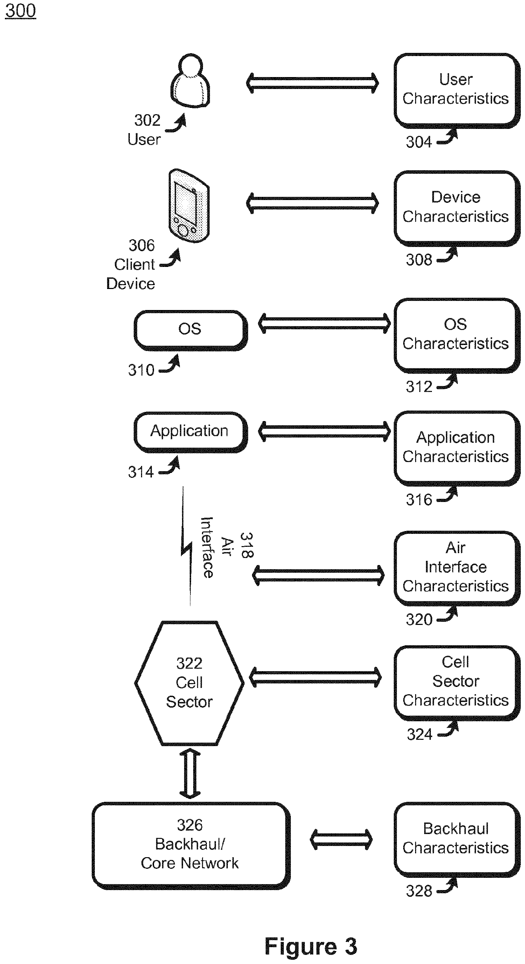

Figure 3 illustrates an exemplary wireless communications stack 300 that may be used for self optimizing networks. In effect, the communications stack 300 illustrates a chain of communications links where each layer has its own specific conditions and/or characteristics, and may be instrumented separately to measure those conditions and/or characteristics. Those conditions and/or characteristics may then be shared up and down the stack or chain to support self optimizing networks.

Conditions and/or characteristics may be static, statistical or dynamic. Specifically, conditions and/or characteristics may be stored in a static profile and accessed by other layers, such as the optimizer in a communications terminal. The static profile may reside on a communications terminal in memory, or alternatively may be accessible on a remote server.

Conditions and/or characteristics may be dynamically determined. Specifically, conditions and/or characteristics can be measured in real time or substantially in real time. As those conditions and/or characteristics are measured, they can be communicated up and down the stack or chain. In this way, an arbitrary portion of the stack can have access to conditions and/or characteristics as measured and/or transmitted in other parts of the stack and can self optimize a network locally.

Conditions and/or characteristics may also be stored in a knowledge base. As various measurements are made by various participants in the communications stack or chain, those measurements may be stored in a server or database. Once stored, those measurements may be indexed to different classes optimization routines or optimization techniques implemented in software or hardware. In this way, a measurement need not be recalculated and/or propagated up and down the communications stack or chain unless there is an optimization routine to make use of the information and therefore an optimization benefit to be realized.

The communications chain or stack may start with user 302. The user 302 may, for example, be a video-call participant that initiates and responds to video-calls. Corresponding to the user 302 is a user profile 304. Example user conditions and/or characteristics may include static user preferences such as expected QoS or QoE settings. Alternatively, user conditions and/or characteristics may include dynamic or statistical measurements of user activities, such as how often the user participates in video-calls, the duration of the video-calls, and the likelihood that additional material, such as office documents are shared.

The user 302 uses a client device 306. Corresponding to client device 306 is client device profile 308. Client device conditions and/or characteristics may include static information such as the make and model of the client device, the number of video cameras on the client device and their respective resolution capabilities. Dynamic conditions and/or characteristics may include power utilization curves, and frequency of transmission/reception errors as measured on the device.

Client device 306 runs an operating system 310. Corresponding to operating system 310 is operating system profile 312. Operating system conditions and/or characteristics may include name, version number and build of the operating system. Dynamic conditions and/or characteristics may include number of background processes running, and the identity of services running concurrently.

Operating system 310 runs one or more applications 314. Corresponding to each application 314 or each class of application is an profile 316. Static characteristics may include the name and build of the application. Dynamic characteristics may include the identity of system services used by the application 314, the type of data used, and the typical transmit and/or receive data volume used by the application under various conditions. Example types of content may include, whether the content is text data, voice data, music audio data, or enterprise data including office documents, or video-conference data,

Client side conditions and/or characteristics, including those for the user, client device operating system, and application, may be measured and detected on the client device. These conditions and/or characteristics generally relate to link quality requirements, such as requirements for a video-call session, but may also relate to link quality capabilities, such as capabilities of a communications link for a video-call. These conditions and/or characteristics may be polled, or measured upon detection of an event. The conditions and/or characteristics may also be collected upon a user directive, such as a button push in an application. The client device may periodically push an archive of stored conditions and/or characteristics to a server on the network for later analysis. Alternatively, the client device may periodically push an archive of stored conditions and/or characteristics to another communications terminal, such as another communication terminal in the video-call session, for that communications terminal to perform other optimizations.

Video-call application 314 transports application and related data over air interface 318. Corresponding to the air interface 318 is a air interface profile. Air interface conditions and/or characteristics may include channel quality information ("CQI") characteristics, a carrier to interference ratio, a discontinuous reception exchange rate ("DRX") and a discontinuation transmission exchange rate ("DTX"). Air interface conditions and/or characteristics 320 may be detected by a client device or alternatively by the base station. When detected by the base station, the base station may periodically push air interface characteristics 320 to the client device.

Air interface 318 connects to a cellular tower and cellular base station in a local cellular sector 322. Corresponding to the local cellular sector 322 is a cellular sector profile. Example cellular sector 322 conditions and/or characteristics 324 may include sector load, geographical information and mobility. For example, a base station in the cellular sector may average call load by time. Alternatively, a base station may note that the sector contains a highway, and most calls include a larger than usual amount of roaming calls.

The cellular sector 322 forwards data via backhaul to the core network 326. Corresponding to the backhaul/core network 326 is the backhaul/core network profile. Example backhaul/core network conditions and/or characteristics 328 may include processing load over time and load from processing billing and metering.

For network side conditions and/or characteristics including those for the air interface 320, the cell sector 324 and the backhaul/core network 328, measurements can be made on servers in the base station or the core network. These conditions and/or characteristics generally relate to link quality capabilities, such as capabilities for a video call session. These conditions and/or characteristics may be periodically pushed to one or more communications terminals, such as terminals participating in a video-call session. In this way, those communications terminals may optimize communications, such as video-calls, using wireless radio communications conditions and/or characteristics.

### Example Device-Based Architecture for Self Optimizing Network Utilizing End to End Communications Chain Information

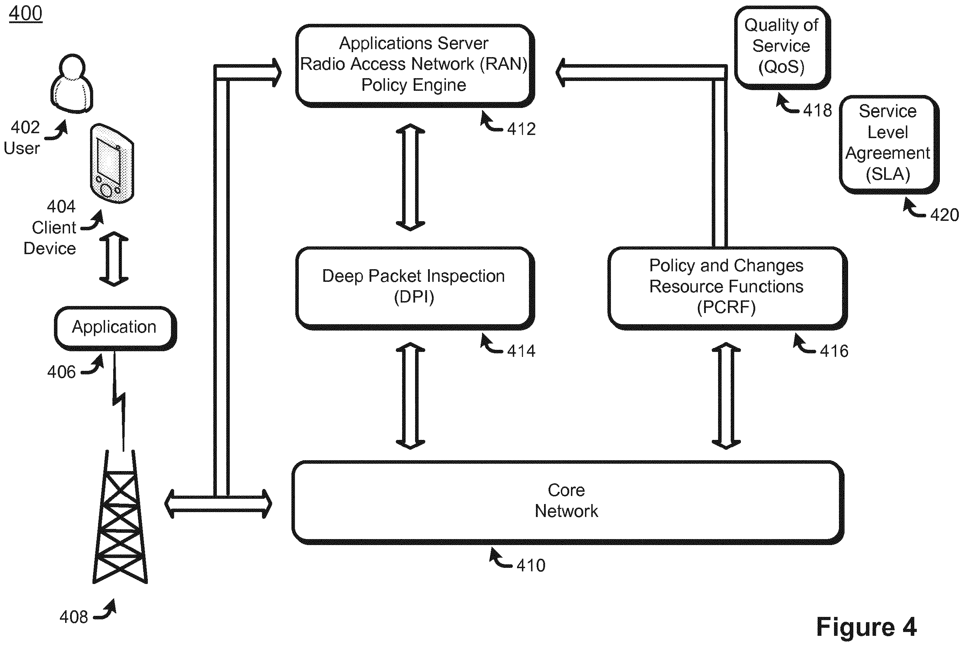

Figure 4 illustrates an example 400 of a self optimizing network that utilizes information about communications link conditions and/or characteristics from the communications chain end to end.

A user 402 participates in a wireless call via client device 404 running application 406. The profiles of the user 402, the client device 404, and the applications 406, plus operating systems conditions and characteristics (not shown), are shared along with the wireless call data via an air interface to base station 408. The base station 408 routes the wireless call data to a core network 410 and propagates the conditions and characteristics as well.

An application server 412 at or the core network 410 or otherwise communicatively coupled to the core network 410, may run an optimizer in the form of a Radio Access Network ("RAN") policy engine 412. The policy engine 412 may receive communications conditions and/or characteristics relating to an user, an client device, an operating system, and/or applications as forwarded by the base station 408. The policy engine 412 may also receive communications conditions and/or characteristics relating to an air interface, an base station, an cell sector, and/or an core network directly.

The policy engine may receive statistics relating to packet content and frequency of the data of the wireless call as processed by the core network 410 via a Deep Packet Inspection ("DPI") component 414. Communications link policies at the core network 416 may be communicated to the policy engine 412 via a Policy and Changes Resource Functions ("PCRF") component 416. Examples of information to be communicated by the PCRF may include Quality of Service ("QoS") 418 levels for the wireless call and Service Level Agreement ("SLA") 420 levels. In general, the PCRF may send parameters that relate to link quality.

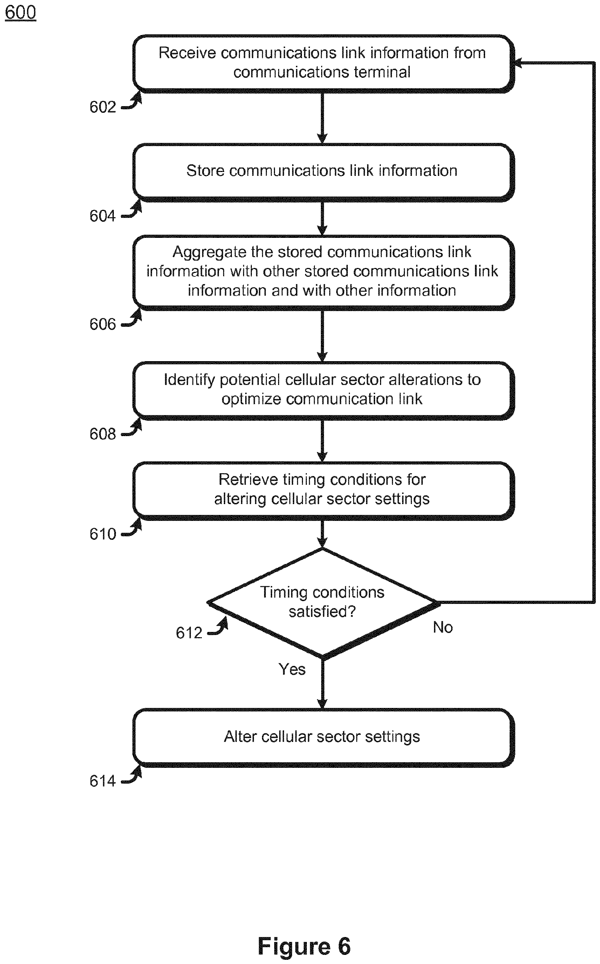

The policy engine 412 may apply various rules to self optimize the network on the server side. Example rules may include: setting a maximum number of codes; setting a maximum bitrate; setting various state transition parameters; setting timer conditions for uplink power; and setting a maximum number of steps for uplink power. A process to self optimize networks utilizing information about communications link conditions and/or characteristics from the communications chain end to end is described with respect to Figure 6.

### Example Link Adaptation and Power Control Coordination Process

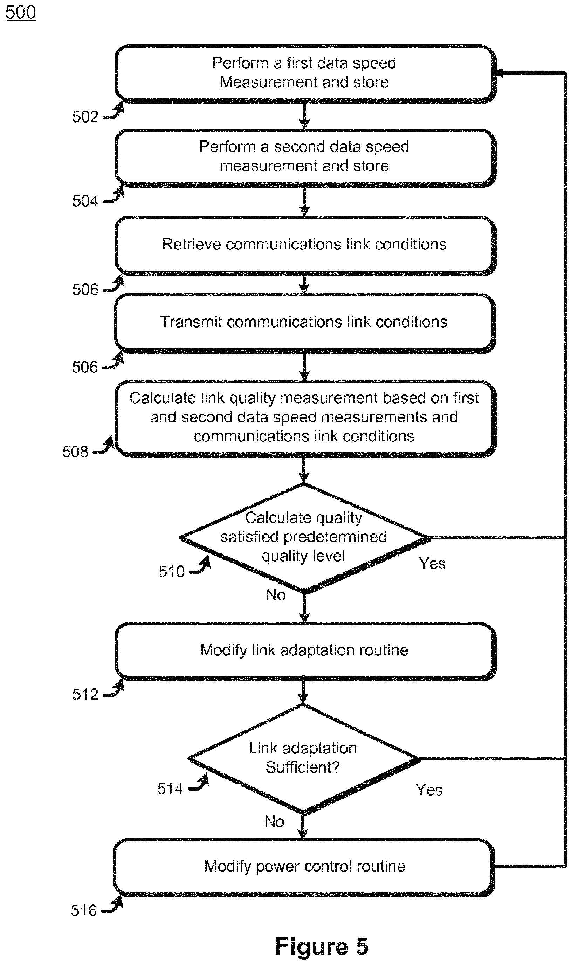

Information about conditions and/or characteristics relating to the communications chain can be obtained from the foregoing discussion. This information may then be utilized to coordinate link adaptation and power control software components. Figure 5 provides a flow chart 500 of an example link adaptation and power control coordination process.

An optimizer may sample a communication link's data speed at various times. In block 502, the optimizer measures and stores data speed. In block 504, the optimizer makes a subsequent measurement of data speed and stores. In this way, the optimizer or other routine may compare the two measurements and extrapolate data speed trends.

In block 506, the optimizer may receive some subset of communications link conditions and/or characteristics. As per the description with respect to Figure 4, the communications link conditions and characteristics may relate to any portion of the communications chain end to end. Alternatively, the information may be restricted to some narrow subset of the communications chain.

The optimizer may measure client side conditions and/or characteristics relating to an user, an client device, an operating system, and/or an application, or alternatively may have access to corresponding profiles. Accordingly, in block 506 the optimizer may transmit those local conditions and/or characteristics to other parts of the communications chain.

In block 508, link quality may be calculated based on the first and/or second data speed measurements. If no extrapolation is to be performed, only the second data speed measurement is to be used. The calculation may also take the received communications link conditions and characteristics.

Upon calculation, in block 510, the optimizer may determine whether the calculated link quality satisfies a predetermined link quality. For example, the calculation may consider whether the calculated link quality meets or exceeds a predetermined Quality of Service ("QoS") and/or Quality of User Experience ("QoE") level.

If link quality is satisfied then processing continues without adaptation. Otherwise, in block 512, a link adaptation routine in the form of a software component may modify one or more characteristics to compensate for an unsatisfactory link quality. For example, the link adaptation routine may increase priority for certain data types, or may proactively drop frames.

In block 514, the optimizer determines whether the link adaptation routine restored link quality to satisfy a predetermined link quality level. If the predetermined link quality is satisfied, then processing continues without further modification. Otherwise, in block 514, the power control routine in the form of a software component may modify one or more characteristics. For example, the power level may be boosted by a particular step for a particular number of times.

In this way, the link adaptation routine has a chance to optimize link quality without interference from the power control routine. The link adaptation routine and the power control routine are both software components that may support various optimization techniques.

In one embodiment, the power control routine is balanced with the link analysis routine by selecting between data bursts with high protection and low power as opposed to low protection and high power. The former results in relatively shorter and frequent data transmission bursts and the latter results in relatively longer and less frequent data transmission bursts. The selection is based on which of the options are more amenable to communications link conditions and characteristics. In this example, the optimization is a balancing of the relationship between the link adaptation routine and the power control routine.

In another embodiment, the hysteresis, or rate change, of the link adaptation and/or power increases with the speed or degree of location change of the communications terminal. For example, where a user is a passenger in a moving bus, the hysteresis increases in order to have sufficient samples to detect condition and/or characteristic changes. However, where the user is stationary in an office, since conditions and/or characteristics are less likely to change, hysteresis may be decreased. In this example, optimizations of the link adaptation routine and the power control routine are independent.

### Example Process for Self Optimizing Network Utilizing End to End Communications Chain Information

Information about conditions and/or characteristics relating to the communications chain end to end may be used in conjunction with coordinating link adaptation and power link routines, or separately. Figure 6 is a flow chart of an example process 600 for self optimizing networks utilizing end to end communications chain information independent of link adaptation and power control.

A communications terminal may have a communications link via an air interface to intervening servers at a base station and/or at a core network. The intervening servers may dynamically adapt to optimize the communications link.

In block 602, the intervening server receives communications information about link conditions and/or characteristics from a communications terminal. In block 604, the received information is stored.

In block 606, the received information may be combined with local condition and/or characteristic information from other intervening servers in the base station and/or core network. Additionally the received information may be aggregated with other information relating to other communications links, from presently active calls and/or calls already completed. In this way, the intervening server may aggregate a critical mass of information to develop statistical and other data models of calls through the intervening server.

Based on a data model, in block 608, the intervening server may then identify potential optimizations for the communications link. Specifically, the intervening sector may identify optimizations for the local cellular sector.

In block 610, the intervening sector may retrieve timing conditions for a candidate cellular sector to be altered. Because there may be some delay in the time a cellular sectors may change or adapt, the times that a cellular sector might be changed may be limited. In some situations, a cellular sector may be modified dynamically substantially in real time. Specifically, upon identifying an optimization, the intervening sector executes the optimization. Alternatively, the intervening sector may be allowed to execute an optimization only a certain times, or for a limited number of times in a time period, or with a built in delay from the last optimization.

If the timing conditions are satisfied, then in block 614, the optimization is performed. Otherwise, the optimization may be delayed or ignored.

### Example Network and Devices with Functionality for Detecting and Controlling Uplink Congestion

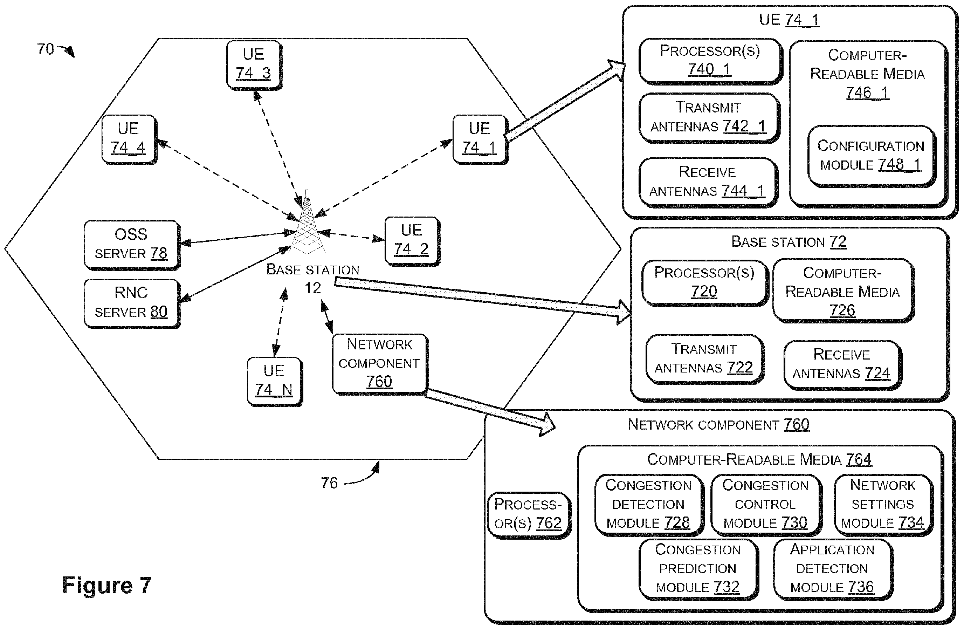

FIG. 7 illustrates a wireless communication network 70 (also referred to herein as network 70) in which congestion in uplink traffic is detected and controlled, in accordance with various embodiments. The network 70 comprises a BS 72 communicatively coupled to a plurality of UEs 74_1, 74_2, ..., 74_N, where N is an appropriate integer. The BS 72 serves UEs located within a geographical area, e.g., within a cell 76. FIG. 7 illustrates the cell 76 to be hexagonal in shape, although other shapes of the cell 76 may also be possible.

In an embodiment, the UEs 74_1, ..., 74_N may comprise any appropriate devices for communicating over a wireless communication network. Such devices include mobile telephones, cellular telephones, mobile computers, Personal Digital Assistants (PDAs), radio frequency devices, handheld computers, laptop computers, tablet computers, palmtops, pagers, integrated devices combining one or more of the preceding devices, and/or the like. As such, UEs 74_1, ..., 74_N may range widely in terms of capabilities and features. For example, one of the UEs 74_1, ..., 74_N may have a numeric keypad, a capability to display only a few lines of text and be configured to interoperate with only Global System for Mobile Communications (GSM) networks. However, another of the UEs 74_1, ..., 74_N (e.g., a smart phone) may have a touch-sensitive screen, a stylus, an embedded GPS receiver, and a relatively high-resolution display, and be configured to interoperate with multiple types of networks. UEs 74_1, ..., 74_N may also include SIM-less devices (i.e., mobile devices that do not contain a functional subscriber identity module ("SIM")), roaming mobile devices (i.e., mobile devices operating outside of their home access networks), and/or mobile software applications.

In an embodiment, the BS 72 may be any of a base station, a node B, an evolved node B (enode B), or any other access network component. The term "base station," as used herein, includes any or all of base stations, node Bs, or enode Bs. The BS 72 may communicate voice traffic and/or data traffic with one or more of the UEs 74_1, ..., 74_N. The BS 72 may communicate with the UEs 74_1, ..., 74_N using one or more appropriate wireless communication protocols or standards. For example, the BS 72 may communicate with the UEs 74_1, ..., 74_N using one or more standards, including but not limited to GSM, Time Division Multiple Access (TDMA), Universal Mobile Telecommunications System (UMTS), Evolution-Data Optimized (EVDO), Long Term Evolution (LTE), Generic Access Network (GAN), Unlicensed Mobile Access (UMA), Code Division Multiple Access (CDMA) protocols (including IS-95, IS-2000, and IS-856 protocols), Advanced LTE or LTE+, Orthogonal Frequency Division Multiple Access (OFDM), General Packet Radio Service (GPRS), Enhanced Data GSM Environment (EDGE), Advanced Mobile Phone System (AMPS), WiMAX protocols (including IEEE 802.16e-2005 and IEEE 802.16m protocols), High Speed Packet Access (HSPA), (including High Speed Downlink Packet Access (HSDPA) and High Speed Uplink Packet Access (HSUPA)), Ultra Mobile Broadband (UMB), and/or the like.

The BS 72 may be communicatively coupled (e.g., using a backhaul connection, illustrated using solid lines in FIG. 7) to a number of backhaul equipments, e.g., an operation support subsystem (OSS) server 78, a radio network controller (RNC) 80, and/or the like.

In an embodiment, the base station 72 may comprise processors 720, one or more transmit antennas 722, one or more receive antennas 724, and computer-readable media 726. The processors 720 may be configured to execute instructions, which may be stored in the computer-readable media 726 or in other computer-readable media accessible to the processors 720. In some embodiments, the processors 720 is a central processing unit (CPU), a graphics processing unit (GPU), or both CPU and GPU, or any other sort of processing unit.

The one or more transmit antennas 722 may transmit signals to the UEs 74_1, ..., 74_N, and the one or more receive antennas 724 may receive signals from the UEs 74_1, ..., 74_N. The antennas 722 and 724 include any appropriate antennas known in the art. For example, antennas 722 and 724 may include radio transmitters and radio receivers that perform the function of transmitting and receiving radio frequency communications. In an embodiment, the antennas 722 and 724 may be included in a trans-receiver module of the BS 72.

The computer-readable media 726 may include computer-readable storage media ("CRSM"). The CRSM may be any available physical media accessible by a computing device to implement the instructions stored thereon. CRSM may include, but is not limited to, random access memory ("RAM"), read-only memory ("ROM"), electrically erasable programmable read-only memory ("EEPROM"), flash memory or other memory technology, compact disk read-only memory ("CD-ROM"), digital versatile disks ("DVD") or other optical disk storage, magnetic cassettes, magnetic tape, magnetic disk storage or other magnetic storage devices, or any other medium which can be used to store the desired information and which can be accessed by the base station 72. The computer-readable media 726 may reside within the base station 72, on one or more storage devices accessible on a local network to the base station 72, on cloud storage accessible via a wide area network to the base station 72, or in any other accessible location.

The computer-readable media 726 may store several modules, such as instructions, data stores, an operating system module, basic input/output systems (BIOS), not illustrated in FIG. 7, to be executed on the processors 720. Furthermore, although not illustrated in FIG. 7, the base station 72 may comprise several other components, e.g., a power bus configured to supply power to various components of the base station 72, one or more interfaces to communicate with various backhaul equipments, and/or the like.

In an embodiment, the BS 72 may be coupled to a network component 760, which may comprise processors 762 and a computer-readable media 764 (which may be, for example, similar to the computer-readable media 726). The computer-readable media 764 may store several modules, such as instructions, data stores, and so forth that are configured to execute on the processors 762. For instance, the computer-readable media 764 may store a congestion detection module 728, a congestion control module 730, a congestion prediction module 730, a network settings module 734, and an application detection module 736, as will be discussed in more detail herein later.

In an embodiment, the network component 760 (or a part of the network component 760) may be included in, or be a part of the BS 72, the OSS server 78, the RNC 80, another appropriate server associated with the network 70, and/or the like. For example, although FIG. 7 illustrates the computer-readable media 764 in the network component 760 storing the congestion detection module 728, the congestion control module 730, the congestion prediction module 730, the network settings module 734, and the application detection module 736, in various other embodiments, one or more of these modules may be stored in any appropriate component of the network 70 (e.g., in the BS 72, the OSS server 78, the RNC 80, another appropriate server associated with the network 70).

In an embodiment, the UE 74_1 may comprise processors 740_1, one or more transmit antennas 742_1, one or more receive antennas 744_1, and computer-readable media 746. The processors 740_1 may be configured to execute instructions, which may be stored in the computer-readable media 746_1 or in other computer-readable media accessible to the processors 740_1. In some embodiments, the processors 740_1 is a central processing unit (CPU), a graphics processing unit (GPU), or both CPU and GPU, or any other sort of processing unit. The one or more transmit antennas 742_1 may transmit signals to the base station 72, and the one or more receive antennas 744_1 may receive signals from the base station 72. In an embodiment, the antennas 742_1 and 744_1 may be included in a trans-receiver module of the UE 74_1.

The computer-readable media 746_1 may also include CRSM. The CRSM may be any available physical media accessible by a computing device to implement the instructions stored thereon. CRSM may include, but is not limited to, RAM, ROM, EEPROM, a SIM card, flash memory or other memory technology, CD-ROM, DVD or other optical disk storage, magnetic cassettes, magnetic tape, magnetic disk storage or other magnetic storage devices, or any other medium which can be used to store the desired information and which can be accessed by the UE 74_1.

The computer-readable media 746_1 may store several modules, such as instructions, data stores, and so forth that are configured to execute on the processors 740_1. For instance, the computer-readable media 740_1 may store a configuration module 748_1. Although not illustrated in FIG. 7, the computer-readable media 746_1 may also store one or more applications configured to receive and/or provide voice, data and messages (e.g., short message service (SMS) messages, multi-media message service (MMS) messages, instant messaging (IM) messages, enhanced message service (EMS) messages, etc.) to and/or from another device or component (e.g., the base station 72, other UEs, etc.).

Although not illustrated in FIG. 7, the UE 74_1 may also comprise various other components, e.g., a battery, a charging unit, one or more network interfaces, an audio interface, a display, a keypad or keyboard, a GPS receiver and/or other location determination component, and other input and/or output interfaces.

Although FIG. 7 illustrates only one UE (i.e., the UE 74_1) in detail, each of the other UEs 74_2, ..., 74_N may have a structure that is at least in part similar to that of the UE 74_1. For example, similar to the UE 74_1, each of the UEs 74_2, ..., 74_N may comprise processors, one or more transmit antennas, one or more receive antennas, and computer-readable media including a configuration module.

In an embodiment, the network settings module 734 maintains a plurality of network settings and/or UE settings (e.g., associated with one or more of the UEs) associated with the network 70. For the remaining portion of the disclosure, a network setting comprises a setting that is associated with the network 70 and/or a setting that is associated with one or more of the UEs. Individual network settings maintained by the network settings module 734 may be pertinent to a single UE of the UEs 74_1, ..., 74_N, a subset of the UEs 74_1, ..., 74_N, or each of the UEs 74_1, ..., 74_N. For example, a network setting of the plurality of network settings may specify a maximum bit rate at which a UE (or each of the UEs 74_1, ..., 74_N) may transmit data to the BS 72. Another network setting of the plurality of network settings may specify a transmit time interval (tti) used by each of the UEs 74_1, ..., 74_N to transmit data to the BS 72. Yet another network setting of the plurality of network settings may specify a maximum power that each of the UEs 74_1, ..., 74_N may use to transmit data to the BS 72 (where the maximum power is also referred to herein as maximum uplink transmission power). The plurality of network settings maintained by the network settings module 734 may also include any other appropriate type of network settings.

In an embodiment, one or more of the plurality of network settings maintained by the network settings module 734 may be communicated to the UEs 74_1, ..., 74_N (e.g., by the transmit antennas 742_1 to the configuration module of the UEs 74_1, ..., 74_N). Based on receiving the network settings, the UEs 74_1, ..., 74_N (e.g., the corresponding configuration modules) may configure themselves and communicate with the BS 72 accordingly.

In an embodiment, the congestion detection module 728 may detect congestion in the traffic between the base station 72 and the UEs 74_1, ..., 74_N. In an embodiment, the congestion detection module 728 may also detect a level of congestion in the traffic between the base station 72 and the UEs 74_1, ..., 74_N. For example, the congestion detection module 728 may detect the congestion (and the level of congestion) in the uplink traffic from the UEs 74_1, ..., 74_N to the base station 72. In an embodiment, the level of congestion provides a measure or a severity of the congestion. However, in another embodiment, the congestion detection module 728 may detect congestion in the uplink traffic, but refrain from detecting a level of the congestion in the uplink traffic.

The congestion detection module 728 may use one or more appropriate metrics to detect congestion in the uplink traffic from the UEs 74_1, ..., 74_N to the base station 72. For example, the congestion detection module 728 may detect a number of failed telephone calls (e.g., telephone calls that have failed to initiate, and/or was abandoned while in progress) from and/or to the UEs 74_1, ..., 74_N due to the congestion in the uplink traffic. For example, the congestion detection module 728 may keep track of such a number of failed telephone calls exceeding one or more thresholds numbers within a specific time interval. In another example, the congestion detection module 728 may detect noise in uplink traffic from the UEs 74_1, ..., 74_N to the BS 72. In yet another example, the congestion detection module 728 may detect a rate of increase in the noise in uplink traffic from the UEs 74_1, ..., 74_N to the BS 72 (e.g., detect that the noise in the uplink traffic has increased by 70 dB in the last 15 minutes). In yet another example, the congestion detection module 728 may detect a number of signaling events in the BS, which are associated with the uplink traffic (e.g., detect that the number of signaling events exceeds a threshold number). In yet another example, the congestion detection module 728 may detect an amount of data processing resource used by the BS for processing the uplink traffic (e.g., detects that the BS uses more than a threshold amount of computing resource for processing the uplink traffic). Based on one more such detections, the congestion detection module 728 may detect congestion, and possibly the level of congestion, in the uplink traffic from the UEs 74_1, ..., 74_N to the base station 72.

For example, during a first time and a second time, the congestion detection module 728 may respectively detect a first level of congestion and a second level of congestion in the uplink traffic, where the first level of congestion may be relatively higher than the second level of congestion. For example, the first level of congestion may be detected based on detecting N1 number of failed telephone calls due to uplink congestion and M1 dB of noise in uplink traffic; and the second level of congestion may be detected based on detecting N2 number of failed telephone calls due to uplink congestion and M2 dB of noise in uplink traffic. The congestion detection module 728 may detect the first level of congestion to be higher than the second level of congestion, based on the values of N1, N2, M1 and M2 (e.g., based on N1 and M1 being higher than N2 and M2, respectively).

In an embodiment, based on the congestion detection module 728 detecting congestion (and possibly the level of congestion) in the uplink traffic, the congestion control module 730 may take various measures to control the congestion in the uplink traffic. For example, based on the detected level of congestion exceeding a first threshold, the congestion control module 730 may take a first measure to control the congestion in the uplink traffic; based on the detected level of congestion exceeding a second threshold, the congestion control module 730 may take a second measure to control the congestion in the uplink traffic, and so on. The first threshold and the second threshold may be dynamic thresholds that are adjusted based on, for example, operating conditions of the network 70.

In an embodiment, in order to control the congestion in the uplink traffic, the congestion control module 730 may modify one or more of the network settings maintained by the network settings module 734. Such modification of the network settings may be communicated to the UEs 74_1, ..., 74_N, based on which the UEs 74_1, ..., 74_N may be configured to reduce the congestion in the uplink traffic.

In an example, a bearer may be associated with wireless communication between a UE and the BS 72, as is well known to those skilled in the art. The bearer may specify various parameters associated with the communication between the UE and the BS 72 (e.g., may specify a bit rate, a tti and/or maximum power used for communication between the UE and the BS 72). In an embodiment, based on the congestion detection module 728 detecting congestion (and possibly the level of congestion) in the uplink traffic, the congestion control 730 module may facilitate limiting the bearer associated uplink communication from one or more of the UEs 74_1, ..., 74_N to the BS 72. Limiting the bearer may comprise reducing a bit rate, a tti and/or maximum power used for communication from one or more of the UEs 74_1, ..., 74_N to the BS 72. For example, in order to facilitate limiting the bearer, the congestion control module 730 may modify one or more of the network settings maintained by the network settings module 734 (e.g., network settings associated with the bit rate, tti and/or maximum power used for communication from one or more of the UEs 74_1, ..., 74_N to the BS 72).

For example, based on detecting congestion in the uplink traffic, the congestion control module 730 may modify a network setting maintained by the network settings module 734, such that one or more of the UEs 74_1, ..., 74_N transmit data to the BS 72 at a reduced bit rate. For example, Release 99 (R99) of the Third Generation (3G) Mobile System developed within the Third Generation Partnership Project (3GPP) specifies various possible bit rates (e.g., 32 Kilobits per second (kbps), 64 kbps, 128 kbps, 256 kbps, 384 kbps, or the like) for transmitting data from a UE to a BS. In the network 70, while no congestion (or a relatively low level of congestion) in the uplink traffic is detected, one or more of the UEs 74_1, ..., 74_N may transmit data to the BS at 384 kbps. Once a congestion in the uplink traffic is detected (e.g., by the congestion detection module 728) to exceed a threshold value, the congestion control module 730 may modify the network setting maintained in the network settings module 734 such that the one or more of the UEs 74_1, ..., 74_N now transmit data to the BS at a reduced bit rate (e.g., 256 kbps, 128 kbps, or even lower bit rate). The reduction in the bit rate may be based on the level of the detected congestion (e.g., for a higher the level of the congestion, the bit rate may be reduced further). In an embodiment, the bit rate may be gradually decreased to control the congestion.

A tti may refer to a duration of a transmission (e.g., duration in which one block of data is transmitted) by a UE to the BS 72. In an embodiment, based on detecting congestion in the uplink traffic, the congestion control module 730 may modify another network setting maintained by the network settings module 734, such that the UEs 74_1, ..., 74_N transmits data to the BS 72 at a reduced tti. For example, the HSUPA standard specifies various possible ttis (e.g., 10 millisecond (ms), 2 ms, or the like) for transmitting data from a UE to a BS. In the network 70, while no (or relatively low level) of congestion in the uplink traffic is detected, one or more of the UEs 74_1, ..., 74_N may transmit data to the BS at 10 ms tti. Once a level of the congestion in the uplink traffic is detected by the congestion detection module 728 to exceed a threshold value, the congestion control module 730 may modify the network settings maintained in the network settings module 734 such that the one or more of the UEs 74_1, ..., 74_N now transmit data to the BS at a reduced tti (e.g., 2 ms). In an embodiment, the reduction in the tti may be based on the level of the detected congestion (e.g., for a higher the level of the congestion, the tti may be reduced further). In an embodiment, the tti may be gradually decreased to control the congestion.

In an embodiment, based on detecting congestion in the uplink traffic, the congestion control module 730 may modify another network setting maintained by the network settings module 734, such that the UEs 74_1, ..., 74_N transmits data to the BS 72 at a reduced power. For example, a reduction in the bit rate and/or a reduction in the tti may result in a reduction in the transmission power of the UEs. Additionally, one or more of the UEs 74_1, ..., 74_N may further decrease the power at which data is transmitted to the BS 72. The reduction in the transmission power may be based on the level of the detected congestion (e.g., for a higher the level of the congestion, the transmission power may be reduced further). In an embodiment, the transmission power may be gradually decreased to control the congestion.

In an embodiment, based on detecting congestion in the uplink traffic, the congestion control module 730 may modify yet another network setting maintained by the network settings module 734, such that an UE transmits data to the BS 72 using a different carrier frequency. For example, one or more UEs may use a carrier frequency for communication with the BS 72. Based on detecting congestion in the uplink traffic, an UE of the one or more of the UEs may be shifted to a different carrier frequency to communicate with the BS 72.

In an embodiment, reduction in the bit rate, the tti and/or the transmission power may be based on a communication protocol used by a UE to transmit to the BS 72. For example, a UE of the UEs 74_1, ..., 74_N may use a first communication protocol for transmitting voice traffic from the UE to the BS 72, and may use a second communication protocol for transmitting data traffic from the UE to the BS 72. In an example, as voice traffic is relatively more time sensitive, the congestion control module 730 may facilitate (e.g., by modifying the network settings maintained by the network settings module 734) a reduction in the bit rate, tti and/or transmission power used in accordance with the second communication protocol for transmitting data traffic from the UE to the BS 72 (e.g., while refraining from reducing the bit rate, tti and/or transmission power used in accordance with the first communication protocol for transmitting voice traffic from the UE to the BS 72).

In an embodiment, subsequent to reducing the bi rate, tti and/or the transmission power of a UE of the UEs 74_1, ..., 74_N, a communication carrier used for communication between the UE and the BS may be reset (or a different communication carrier may be used for communication between the specific UE and the BS). For example, when a large number of UEs (e.g., all or a subset of the UEs communicating with the BS 72) reduce bi rate, tti and/or transmission power for transmission to the BS 72, such reductions may result in a faster control of the uplink congestion (e.g., may result in a faster convergence of the congestion control algorithm) if the UEs reset and/or switch respective communication carrier used for communicating with the BS 72. Resetting a communication carrier used may involve locking the communication carrier for a short duration (e.g., a few milliseconds, or a few seconds), and unlocking the communication carrier used for communication between the UE and the BS.

Uplink traffic may generally comprise smaller packets, e.g., compared to the downlink traffic (e.g., due to a nature of browsing the Internet from a UE). Moreover, a connection time during which uplink data packets are transmitted may be smaller, e.g., compared to that for downlink data packets. Accordingly, a UE may transmit uplink data in slots, with such slots occurring frequently. Thus, signaling overhead for uplink traffic (e.g., comprising control signals, acknowledgements, etc. associated with the transmission of uplink data packets) may be significant, contributing to the congestion in the uplink traffic.

In an embodiment, in order to mitigate or reduce the congestion in the uplink traffic, a signaling overhead associated with the uplink traffic in the network 70 may be reduced. Merely as an example, a UE may want to transmit 10 data packets to the BS 72. The UE may transmit 6 data packets of the 10 data packets to the BS 72 during a first uplink transmission, and transmit the remaining 4 data packets of the 10 data packets to the BS 72 during a second uplink transmission. However, each of the two uplink transmissions may require transmission of respective control signals, acknowledgement signals, etc., thereby increasing the signaling overhead. Accordingly, in order to reduce the signaling overhead associated with the uplink transmission, all the 10 data packets may be transmitted from the UE to the BS 72 during a single uplink transmission, thereby reducing the control signals, acknowledgement signals, etc., associated with the uplink transmission.

Accordingly, in an embodiment, the signaling overhead associated with the uplink traffic in the network 70 is reduced by, for example, establishing a relatively longer connection time between individual UEs of the UEs 74_1, ..., 74_N and the BS 72 for uplink transmission, transmitting a relatively large number of data packets from the individual UEs to the BS 72 during a single uplink transmission slot, and/or the like.

A UE may operate in one of several possible modes of operation (e.g., a sleep mode, an idle mode, a standby mode, a hibernation mode, an active mode, and/or the like). For example, the UE may enter a sleep mode (also referred to herein as an idle mode or a low power mode) after a certain period of inactivity. In another example, the UE may periodically enter the sleep mode while being inactive. Each time a UE changes its mode of operation, the UE may signal the BS 72 regarding such a change. Accordingly, a change in the mode of operation of the UE may increase a signaling overhead in the uplink traffic.

In an embodiment, once the congestion detection module 728 detects congestion in the uplink traffic, the congestion control module 730 may facilitate a reduction in the signaling overhead associated with the uplink traffic (e.g., through modification of network settings maintained by the network settings module 734) by reducing a frequency of transition or change in the operating modes of the UEs 74_1, ..., 74_N. For example, in response to the detected congestion, the UEs 74_1, ..., 74_N may enter the sleep mode less frequently, thereby reducing the signaling overhead in the uplink traffic associated with entering the sleep mode. For example, the congestion control module 730 may increase a timer of the network settings maintained by the network settings module 734, where the timer is used by the configuration modules of the UEs 74_1, ..., 74_N to enter the sleep mode. The increase in the timer settings may result in the UEs 74_1, ..., 74_N to enter the sleep mode less frequently (e.g., after longer intervals of inactivity).

In an embodiment, the amount of increase in the timer may be based on the level of the detected congestion in the uplink traffic. For example, in response to the level of the detected congestion in the uplink traffic exceeding a first threshold level, the timer may be increased by a first amount; and in response to the level of the detected congestion in the uplink traffic exceeding a second threshold level, the timer may be increased by a second amount. The second threshold level may be higher than the first threshold level, and accordingly, the second amount may be higher than the first amount.

In an embodiment, a UE may communicate with the BS 72 using one or more of a plurality of communication protocols. For example, a UE may utilize second-generation (2G) and 2G transitional mobile telephony protocols (e.g., GSM, IS-95, GPRS, IS-2000, EDGE, and/or the like) to communicate with the BS 72. The UE may also utilize 3G and 3G transitional mobile telephony protocols (e.g., UMTS, IS-856, HSDPA, HSUPA, EVDO, IEEE 802.16e-2005, and/or) to communicate with the BS 72. The UE may also utilize fourth-generation (4G) and 4G transitional mobile telephony protocols (e.g., LTE, Advanced LTE or LTE+, WiMAX, and/or the like) to communicate with the BS 72. Some of these communication protocols may involve relatively higher signaling overhead compared to the others. For example, a 4G protocol may require relatively higher signaling overhead compared to a 3G protocol, and a 3G protocol may require relatively higher signaling overhead compared to a 2G protocol.

In an embodiment, in response to detecting the congestion in the uplink traffic, one or more of the UEs 74_1, ..., 74_N may change a communication protocol used for communicating with the BS 72 (e.g., may start using a communication protocol that requires less signaling overhead). For example, if the UE 74_1 is using a 4G communication protocol while the congestion is detected, the UE 74_1 may switch to a communication protocol (e.g., a 3G communication protocol, or a 2G communication protocol) that requires less signaling overhead, based on the detected level of congestion.

In an embodiment, in response to detecting the congestion in the uplink traffic, the BS 72 may also perform load balancing. For example, the BS 72 may handover one or more UEs, which are at or near a boundary of the cell 76, to a neighboring BS. For example, FIG. 7 illustrates the UE 74_3 being located near the boundary of the cell 76. In response to detecting the congestion in the uplink traffic, the BS 72 may handover the UE 74_3 to a neighboring BS. Such a handover may decrease a number of UEs served by the BS 72, thereby reducing the congestion in the uplink traffic of the network 70.

In an embodiment, the application detection module 736 may detect one or more applications running on one or more of the UEs 74_1, ..., 74_4. In an embodiment, the congestion control module 730 may control congestion based on the applications detected to be running on the one or more of the UEs 74_1, ..., 74_4. For example, the application detection module 736 may detect a first application running of a first UE and a second application running on a second UE, where the first application is more time sensitive and/or more requires higher level of data communication with the BS 72 compared to the second application. Accordingly, while controlling uplink congestion, the congestion control module 730 may decrease a bit rate of the second UE at a higher rate than that of the first UE (e.g., based on detecting that the first application is more time sensitive and/or more requires higher level of data communication with the BS 72 compared to the second application).

The congestion in the uplink traffic, as detected by the congestion detection module 728, may vary with time. For example, the detected congestion may have peaks (e.g., be high for a relatively short duration). If the congestion control module 730 attempts to control the congestion based on such peaks, such control may result in reduction in the quality of service across the network 70 (e.g., such a peak may result in large reduction in bit rate and/or tti in the UEs 74_1, ..., 74_N, thereby resulting in a large reduction in the quality of service across the network 70). In an embodiment, the congestion detection module 728 may ignore any such peaks in the detected congestion. For example, the congestion detection module 728 may filter the detected congestion to smooth out such peaks in the detected congestion. In another example, the congestion detection module 728 may use a moving average (e.g., use an average of the congestion detected in the last 15 minutes) to detect congestion in the uplink traffic.

Once congestion in the uplink traffic is detected and measures are taken to control the congestion, the congestion may be gradually reduced. For example, based on detecting the level of congestion, the bit rate and/or the tti of various UEs in the network 70 may be reduced, resulting in a gradual reduction in the congestion. Once the congestion is reduced, the original network settings (e.g., the network settings of the UEs prior to detecting the congestion) may be gradually restored. For example, after waiting for a period of time (e.g., 30 minutes) since the level of detected congestion reduces beyond a threshold level, the bit rate, the tti and/or the other network settings of various UEs in the network 70 may be gradually modified to the pre-congestion level.
The congestion detection module 728 detects congestion during or after the occurrence of the congestion. In an embodiment, the congestion prediction module 732 may predict congestion, based on which the congestion control module 730 may proactively take various measures to control (e.g., to avoid or reduce) the predicted congestion. For example, during morning rush hours in the weekdays, a suburban train station may be crowded than usual. Accordingly, it may be predicted (e.g., by the congestion prediction module 732) that during the morning rush hours, a relatively large number of telephone calls may be originating from the train station, leading to a possible congestion in the uplink traffic. Accordingly, even before the congestion is detected by the congestion detection module 728, the congestion control module 730 may proactively take various measures (e.g., as previously discussed) to control the congestion during the morning rush hours at a BS located on or near the train station. In another example, the congestion prediction module 732 may predict congestion in a stadium during a weekend (e.g., while a football match is scheduled in the stadium). In an embodiment, the congestion prediction module 732 may take into account a time of a day (e.g., morning or evening rush hours), a day of a week (e.g., weekdays), a location of the BS 72 (e.g., a train station, a stadium, etc.), and/or the like to predict congestion in the uplink traffic.

### Example Processes for Detecting and Controlling Uplink Congestion

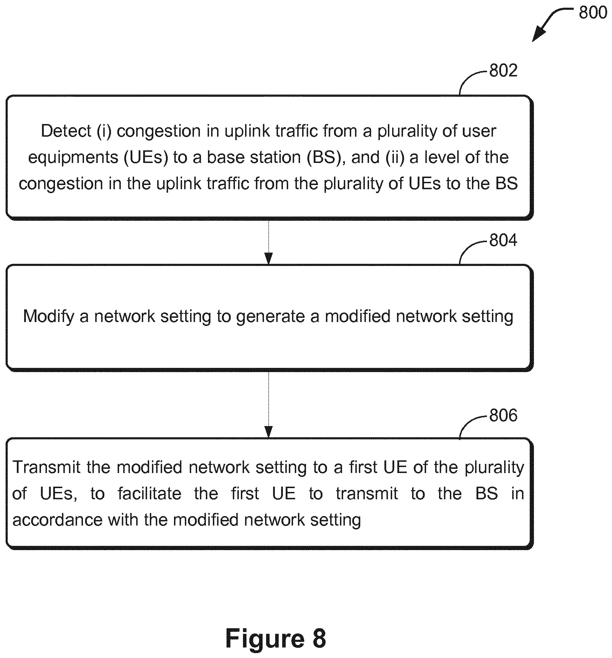

FIG. 8 is a flowchart showing a method of detecting and mitigating congestion in the uplink traffic of a wireless communication network. As illustrated at block 802, a congestion detection module detects (i) congestion in uplink traffic from a plurality of UEs (e.g., UEs 74_1, ..., 74_N) to a BS (e.g., BS 72), and (ii) a level of the congestion in the uplink traffic from the plurality of UEs to the base station. In an embodiment, the detection is based on detecting one or more of (i) a number of failed telephone calls from and/or to the plurality of UEs, (ii) a noise level in the uplink traffic, and (iii) a rise in the noise level in the uplink traffic.

At block 804, based on the detection at block 802, a congestion control module modifies a network setting to generate a modified network setting. The network setting is stored, for example, in a network setting module. In an embodiment, the network setting comprises a bit rate at which a first UE of the plurality of UEs transmits to the BS, and the network setting is modified to decrease the bit rate at which the first UE transmits to the BS. In an embodiment, the network setting comprises a transmission time interval with which the first UE transmits to the BS, and the network setting is modified to decrease the transmission time interval with which the first UE transmits to the BS. In an embodiment, the network setting comprises a maximum power with which the first UE transmits to the BS, and the network setting is modified to decrease the maximum power with which the first UE transmits to the BS. In an embodiment, the network setting comprises a timer based on which the first UE enters a sleep mode, and the network setting is modified to increase a value of the timer. In an embodiment, the network setting comprises a communication protocol used by the first UE to communicate with the BS, and the network setting is modified to change the communication protocol used by the first UE to communicate with the BS. In an embodiment, the BS is a first BS, and the network setting is modified to handover the first UE to a second BS that is neighboring the first BS.

At block 806, a transmission module (e.g., comprising the one or more transmit antennas 122) transmits the modified network setting to the first UE of the plurality of UEs, to facilitate the first UE to transmit to the BS in accordance with the modified network setting.

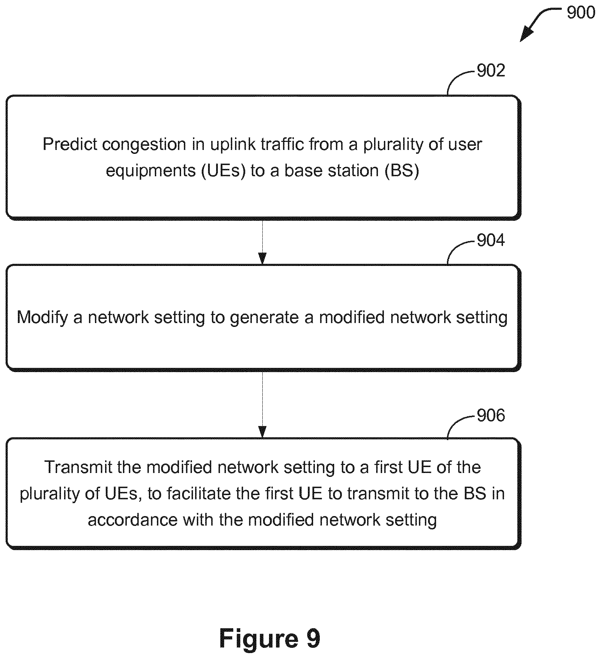

FIG. 9 is a flowchart showing a method of predicting and mitigating congestion in uplink traffic of a wireless communication network. As illustrated at block 902, a congestion prediction module predicts congestion in uplink traffic from a plurality of user equipments (UEs) to a base station (BS). At block 904, based on the prediction at block 902, a congestion control module modifies a network setting to generate a modified network setting. At block 906, a transmission module (e.g., comprising the one or more transmit antennas 722) transmits the modified network setting to the first UE of the plurality of UEs, to facilitate the first UE to transmit to the BS in accordance with the modified network setting.

FIGs. 7-9 are directed towards a network component (e.g., the network component 760) detecting (or predicting) congestion in the uplink traffic, and taking one or more measures to mitigate the congestion. However, in an embodiment (and although not illustrated in FIGs. 7-9), the network component 760 (e.g., the congestion detection module 728 and/or the congestion prediction module 732) detects or predicts congestion in the uplink traffic, and transmits the congestion information (e.g., using a congestion information transmission module, not illustrated in FIG. 7) to the UEs (e.g., UEs 74_1, ..., 74_4). For example, the network component 760 transmits congestion information (e.g., a level or severity of the congestion, and/or other appropriate metrics associated with the congestion in the uplink traffic) to the UEs. Based on receiving the congestion information (e.g., as received by a congestion information reception module in one or more of the UEs, not illustrated in FIG. 7), one or more of the UEs take of or more measures (e.g., by a congestion control module in one or more of the UEs, not illustrated in FIG. 7) to counter or mitigate the uplink congestion (e.g., one or more measures as previously discussed herein). For example, based on receiving the congestion information, a first UE may transmit to the BS 72 using a reduced power level, a second UE may transmit to the BS 72 using a reduced bit rate, and/or the like, as previously discussed herein.

### Conclusion

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A computing device to self-optimize a communications link in a wireless communication network, comprising:
a processor (204);
a memory (208) communicatively coupled to the processor;
a radio component (206) communicatively coupled to the processor and adapted to participate in the communications link;
a data speed measuring software component resident in the memory, configured to measure the data speed (102) of the communications link;
a power measuring software component resident in the memory, configured to measure power utilized by the communications link;
a link adaptation software routine (108) resident in the memory;
a power control software routine (110) resident in the memory; and
a self optimizing network software component resident in the memory, configured to selectively apply the link adaptation software routine and the power control software routine based on a data speed measurement by the data speed measuring software component and a power measurement by the power measuring software component,
**characterized in that**
the link adaptation software routine is applied when the data speed drops below a first predetermined threshold (112) and the power control software routine is additionally applied if the data speed continues to drop below a second predetermined threshold (120).

2. The computing device of claim 1, further comprising:
a communications link conditions communications component resident in the memory adapted to receive communications link conditions,
wherein the self optimizing network software component is further configured to selectively apply the link adaptation software routine and the power control software routine based on received communication link conditions from the communications link conditions communications component.

3. A method, performed by a computing device, for self-optimization of a communications link in a wireless communication network, the method comprising:
measuring a data speed of a communications link;
measuring power utilized by the communications link;
selectively applying a link adaptation software routine and a power control software routine based on the measured data speed and the measured power,
**characterized by**
applying the link adaptation software routine when the data speed drops below a first predetermined threshold and then additionally applying the power control software routine if the data speed continues to drop below a second predetermined threshold.

4. The method of claim 3, further comprising:
receiving communication link conditions; and
selectively applying the link adaptation software routine and the power control software routine based on the received communication link conditions.

5. A computer-readable storage medium having computer-readable instructions stored thereon, which, when executed by a processor, cause the processor to perform the method of one of claims 3 to 4.

## Patentansprüche

1. Rechnervorrichtung zur Selbstoptimierung einer Kommunikationsverbindung in einem drahtlosen Kommunikationsnetzwerk, umfassend:
einen Prozessor (204);
einen mit dem Prozessor kommunikativ verbundenen Speicher (208);
eine mit dem Prozessor kommunikativ verbundene Funkkomponente (206), angepasst, um an der Kommunikationsverbindung zu partizipieren;
eine in dem Speicher residente Datengeschwindigkeitsmessungs-Softwarekomponente, konfiguriert, um die Datengeschwindigkeit (102) der Kommunikationsverbindung zu messen;
eine in dem Speicher residente Leistungsmessungs-Softwarekomponente, konfiguriert, um die durch die Kommunikationsverbindung genutzte Leistung zu messen;
eine in dem Speicher residente Verbindungsanpassungs-Softwareroutine (108);
eine in dem Speicher residente Leistungssteuerungs-Softwareroutine (110); und
eine in dem Speicher residente selbstoptimierende Netzwerk-Softwarekomponente, konfiguriert, um die Verbindungsanpassungs-Softwareroutine und die Leistungssteuerungs-Softwareroutine basierend auf einer von der Datengeschwindigkeitsmessungs-Softwarekomponente durchgeführten Datengeschwindigkeitsmessung und einer von der Leistungsmessungs-Softwarekomponente durchgeführten Leistungsmessung selektiv anzuwenden,
**dadurch gekennzeichnet, dass**
die Verbindungsanpassungs-Softwareroutine angewandt wird, wenn die Datengeschwindigkeit unter einen ersten vorgegebenen Schwellenwert (112) fällt, und die Leistungssteuerungs-Softwareroutine zusätzlich angewandt wird, wenn die Datengeschwindigkeit weiterhin unter einen zweiten vorgegebenen Schwellenwert (120) fällt.

2. Rechnervorrichtung nach Anspruch 1, des Weiteren umfassend:
eine in dem Speicher residente Kommunikationsverbindungsbedingungen-Kommunikationskomponente, daran angepasst, Kommunikationsverbindungsbedingungen zu empfangen, wobei die selbstoptimierende Netzwerk-Softwarekomponente des Weiteren konfiguriert ist, die Verbindungsanpassungs-Softwareroutine und die Leistungssteuerungs-Softwareroutine basierend auf von der Kommunikationsverbindungsbedingungen-Kommunikationskomponente empfangenen Kommunikationsverbindungsbedingungen selektiv anzuwenden.

3. Verfahren, durchgeführt von einer Rechnervorrichtung, zur Selbstoptimierung einer Kommunikationsverbindung in einem drahtlosen Kommunikationsnetzwerk, wobei das Verfahren die nachstehenden Schritte umfasst:
Messen einer Datengeschwindigkeit einer Kommunikationsverbindung;
Messen von durch die Kommunikationsverbindung genutzter Leistung;
selektives Anwenden einer Verbindungsanpassungs-Softwareroutine und einer Leistungssteuerungs-Softwareroutine basierend auf der gemessenen Datengeschwindigkeit und der gemessenen Leistung,
**gekennzeichnet durch**
ein Anwenden der Verbindungsanpassungs-Softwareroutine, wenn die Datengeschwindigkeit unter einen ersten vorgegebenen Schwellenwert fällt, und anschließend ein zusätzliches Anwenden der Leistungssteuerungs-Softwareroutine, wenn die Datengeschwindigkeit weiterhin unter einen zweiten vorgegebenen Schwellenwert fällt.

4. Verfahren nach Anspruch 3, des Weiteren umfassend:
Empfangen von Kommunikationsverbindungsbedingungen; und
selektives Anwenden der Verbindungsanpassungs-Softwareroutine und der Leistungssteuerungs-Softwareroutine basierend auf den empfangenen Kommunikationsverbindungsbedingungen.

5. Computerlesbares Speichermedium mit darauf gespeicherten computerlesbaren Anweisungen, die, wenn sie von einem Prozessor ausgeführt werden, den Prozessor zur Durchführung des Verfahrens nach einem der Ansprüche 3 bis 4 veranlassen.

## Revendications

1. Dispositif informatique pour auto-optimiser une liaison de communication dans un réseau de communication sans fil,
comprenant :
un processeur (204);
une mémoire (208) couplée en communication avec le processeur;
un composant radio (206) couplé en communication au processeur et conçu pour participer à la liaison de communication;
un composant logiciel de mesure de la vitesse de transmission de données résidant dans la mémoire, configuré pour mesurer la vitesse de transmission de données (102) de la liaison de communication;
un composant logiciel de mesure de puissance résidant dans la mémoire, configuré pour mesurer la puissance utilisée par la liaison de communication;
une routine logicielle d'adaptation de liaison (108) résidant dans la mémoire;
une routine logicielle de commande de puissance (110) résidant dans la mémoire; et
un composant logiciel de réseau auto-optimisé résidant dans la mémoire,
configuré pour appliquer sélectivement la routine logicielle d'adaptation de liaison et la routine logicielle de commande de puissance sur la base de la mesure de vitesse de transmission de données par le composant logiciel de mesure de vitesse de transmission de données et une mesure de puissance par le composant logiciel de mesure de puissance,
**caractérisé en ce que**
la routine logicielle d'adaptation de liaison est appliquée lorsque la vitesse de transmission de données tombe en dessous d'un premier seuil prédéterminé (112) et la routine logicielle de commande de puissance est appliquée en plus si la vitesse de transmission de données continue à chuter en dessous d'un second seuil prédéterminé (120).

2. Dispositif informatique selon la revendication 1, comprenant en outre:
un composant de communication en conditions de liaison de communication résidant dans la mémoire et conçu pour recevoir des conditions de liaison de communication,
dans lequel le composant logiciel de réseau auto-optimisé est en outre configuré pour appliquer sélectivement la routine logicielle d'adaptation de liaison et le routine logicielle de commande de puissance sur la base de conditions de liaison de communication reçues à partir du composant de communication en conditions de liaison de communication.

3. Procédé réalisé par un dispositif informatique, pour l'auto-optimisation d'une liaison de communication dans un réseau de communication sans fil, le procédé comprenant:
mesurer une vitesse de transmission de données d'une liaison de communication; mesurer la puissance utilisée par la liaison de communication;
appliquer de manière sélective une routine logicielle d'adaptation de liaison et une routine logicielle de commande de puissance en fonction de la vitesse de transmission de données mesurée et de la puissance mesurée,
**caractérisé par**
l'application de la routine logicielle d'adaptation de liaison lorsque la vitesse de transmission de données tombe en dessous d'un premier seuil prédéterminé, puis l'application supplémentaire de la routine logicielle de commande de puissance si la vitesse de transmission de données continue à chuter en dessous d'un second seuil prédéterminé.

4. Procédé selon la revendication 3, consistant en outre à:
recevoir des conditions de liaison de communication; et
appliquer de manière sélective la routine logicielle d'adaptation de liaison et la routine logicielle de commande de puissance en fonction des conditions de liaison de communication reçues.

5. Support de stockage lisible par ordinateur sur lequel sont stockées des instructions lisibles par ordinateur qui, lorsqu'elles sont exécutées par un processeur, conduisent le processeur à exécuter le procédé selon l'une des revendications 3 ou 4.
